# EUROPEAN PATENT APPLICATION

(11) **EP 4 503 273 A1**
(43) Date of publication of application: **05.02.2025**
(21) Application number: 23780138.6
(22) Date of filing: 24.03.2023
(51) Int. Cl.: H01M 50/105, H01M 10/058, H01M 50/129, H01M 50/178

(54) **METHOD FOR PRODUCING BATTERY EQUIPPED WITH LAMINATE-FILM OUTER PACKAGE**

(30) Priority: 30.03.2022 JP 2022055282
(71) Applicant: Panasonic Energy Co., Ltd., Osaka 570-8511 (JP)
(72) Inventor: OKUDA, Kazuhiro, Kadoma-shi, Osaka 571-0057 (JP)
(74) Representative: Eisenführ Speiser
(86) International application number: PCT/JP2023/011762
(87) International publication number: WO 2023/190128

(57) **Abstract**

The present invention pertains to a method for producing a battery equipped with a laminate-film outer package in which an electrode body (50) is outer-packaged with a laminate film (120). The present invention includes: an outer-packaging step for outer-packaging the electrode body (50) with a laminate-film outer package; and a sealing step for sealing the periphery of the electrode body (50) with the laminate-film outer package. The sealing step comprises: a first-stage sealing step for welding, while leaving a non-welded part at a leading end portion, an inner resin layer inward of the non-welded part; and a second-stage sealing step for heating and pressing the non-welded part, and pushing the inner resin layer outwardly, to thereby cover, with the inner resin layer, an end surface of a metal layer at the leading end of the laminate-film outer package.

## Description

### TECHNICAL FIELD

The present disclosure relates to a method for producing a battery equipped with a laminate-film outer package in which an electrode assembly including a positive electrode and a negative electrode is outer-packaged with laminate films each including an outer resin layer, a metal layer, and an inner resin layer.

### BACKGROUND

Secondary batteries such as lithium ion batteries are used as power sources for various electric devices, and in particular, small and thin secondary batteries are used as power sources for electronic devices such as smartphones, tablets, and notebook computers.

As such small and thin power sources, secondary batteries each equipped with a laminate-film outer package, particularly flat type secondary batteries, are widely used.

In such a laminate-film outer package, a laminate film is formed into a bag shape to accommodate the electrode assembly inside, but an end portion of the laminate film is exposed. As described above, the laminate film includes three layers: the outer resin layer, the metal layer, and the inner resin layer, and the end of the metal layer is also exposed.

When the metal layer comes into contact with, for example, a member having a negative potential, metal corrosion is likely to occur. In the battery, it is necessary to connect the positive electrode and the negative electrode to the outside, and thus the positive electrode tab and the negative electrode tab of the main body of the battery are exposed from the laminate-film outer package. Therefore, there is a possibility that the positive electrode tab or the negative electrode tab comes into contact with the metal layer of the laminate-film outer package.

In Patent Literature 1, the aforementioned problem is solved by covering an end portion of a laminate-film outer package with a thermally adhesive insulating sheet.

### CITATION LIST

### PATENT LITERATURE

Patent Literature 1: JP 2007-95465 A

### SUMMARY

According to Patent Literature 1, it is possible to reliably cover the end portion of the laminate-film outer package, thereby insulating a metal layer from the outside.

However, when such a separate component is provided, the cost for the separate component is also incurred, and the workload increases.

A method for producing a battery equipped with a laminate-film outer package according to the present disclosure is a method for producing a battery equipped with a laminate-film outer package in which an electrode assembly including a positive electrode and a negative electrode is outer-packaged with laminate films each including an outer resin layer, a metal layer, and an inner resin layer, the method including: an outer-packaging process of outer-packaging the electrode assembly with the laminate-film outer package; and a sealing process of sealing a periphery of the electrode assembly with the laminate-film outer package, in which the sealing process includes: a first-stage sealing process of weld-bonding the inner resin layers inside a non-weld-bonded part left between leading end portions of the inner resin layers; and a second-stage sealing process of heating and pressing the non-weld-bonded part to push the inner resin layers outward so that end surfaces of the metal layers are covered with the inner resin layers at a leading end of the laminate-film outer package.

According to the present disclosure, the end surfaces of the metal layers of the laminate films can be covered with the inner resin layers by the second-stage sealing process. Therefore, since it is not necessary to cover the end surfaces with a separate insulating material or the like, there is no increase in the number of components, and the end surfaces of the metal layers can be insulated in a relatively simple process.

### BRIEF DESCRIPTION OF DRAWINGS

FIG. 1 is a perspective view showing a schematic shape of a battery equipped with a laminate-film outer package produced by a production method according to an embodiment.
FIG. 2 is a view showing a cross section of a laminate film used for the laminate-film outer package.
FIG. 3 is a view showing an electrode assembly manufacturing process of manufacturing an electrode assembly.
FIG. 4 is a view showing a laminate film outer-packaging process and a sealing process.
FIG. 5 is a view showing an injection process and a decompression-sealing process.
FIG. 6 is a view showing a main sealing process, a side cutting process, and a side bending process.
FIG. 7 is a view showing an outline of the sealing process.
FIG. 8 is a view for explaining a top sealing process.
FIG. 9 is a view for explaining a side sealing process.
FIG. 10 is a view for explaining a main sealing process.

### DESCRIPTION OF EMBODIMENTS

Hereinafter, embodiments of the present disclosure will be described below, with reference to the drawings. Note that the following embodiments do not limit the present disclosure, and a configuration obtained by selectively combining a plurality of examples is also included in the present disclosure.

### "Configuration of Battery"

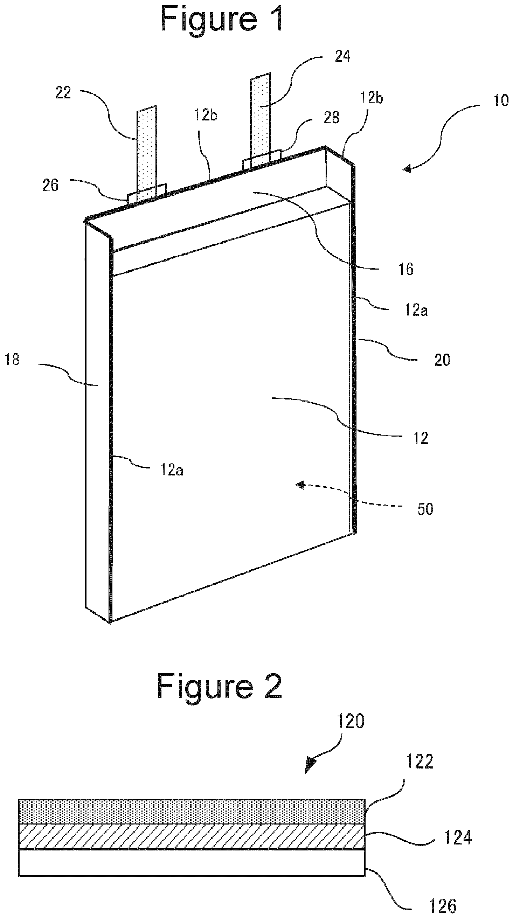

FIG. 1 is a perspective view showing a schematic shape of a battery equipped with a laminate-film outer package produced by a production method according to an embodiment.

A battery 10 has a thin rectangular parallelepiped shape as a whole, and is covered with a laminate-film outer package 12. In this example, the battery 10 is a lithium ion battery.

The laminate-film outer package 12 is a thin film, and an electrode assembly 50 and an electrolyte are housed in a thick part of a rectangular parallelepiped.

As will be described below, the electrode assembly 50 is wrapped by folding a large laminate film in two, and the remaining three sides are sealed.

In this example, the upper side is a top sealed part 16, the left side is a side sealed part 18, and the left side is a main sealed part 20. The side sealed part 18 and main sealed part 20 are folded back in the thickness direction so as to overlap side walls of the battery 10.

A positive electrode tab 22 and a negative electrode tab 24 protrude from the top sealed part 16. The positive electrode tab 22 and the negative electrode tab 24 are connected to a positive electrode 30 and a negative electrode 40, respectively. Insulating tab films 26 and 28 are interposed between the positive electrode tab 22 and the negative electrode tab 24 and the laminate-film outer package 12 at root portions of the positive electrode tab 22 and the negative electrode tab 24.

The battery 10 equipped with such a laminate-film outer package 12 is connected to the outside by the positive electrode tab 22 and the negative electrode tab 24.

In the drawing, both front end surfaces 12a on the left and right sides and the upper end surface 12b of the laminate-film outer package 12 indicated by thick lines are defined by bonding two laminate films formed by two-part folding to overlap each other in such a manner that inner resin layers are in contact with each other.

### "Configuration of Laminate Film"

FIG. 2 is a view showing a cross section of a laminate film 120 used for the laminate-film outer package 12. As shown therein, the laminate film 120 has a three-layer structure including an outer resin layer 122, a metal layer 124, and an inner resin layer 126.

The metal layer 124 is made of, for example, aluminum or an aluminum alloy. The outer resin layer 122 is made of, for example, nylon, and the inner resin layer 126 is made of, for example, polypropylene. The metal layer 124 and the outer resin layer 122 can be bonded to each other by, for example, a dry laminate adhesive, while the metal layer 124 and the inner resin layer 126 can be bonded to each other by carboxylic acid-modified polypropylene in which a carboxyl group is added to polypropylene.

Note that the above-described configuration is an example, and the present disclosure is not limited thereto.

### "Description of Production Process"

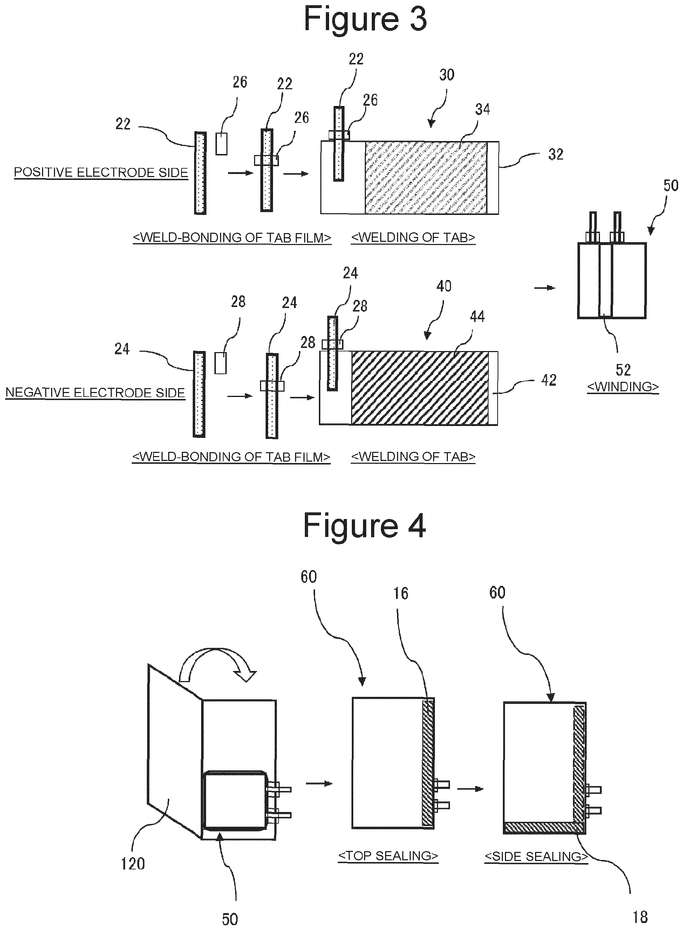

A process of producing the battery 10 equipped with the laminate-film outer package 12 will be briefly described with reference to FIGS. 3 to 6.

### "Electrode Assembly Manufacturing Process"

FIG. 3 shows an electrode assembly manufacturing process of manufacturing the electrode assembly 50. First, the tab films 26 and 28 are weld-bonded to the positive electrode tab 22 and the negative electrode tab 24, respectively.

Next, the positive electrode tab 22 is welded to a core material 32 of the positive electrode 30, and the negative electrode tab 24 is welded to a core material 42 of the negative electrode 40. A positive electrode active material layer 34 is formed on a surface of the core material 32 of the positive electrode 30, and a negative electrode active material layer 44 is formed on a surface of the core material 42 of the negative electrode 40. The core material 32 is formed of, for example, an aluminum foil, the core material 42 is formed of, for example, a copper foil. The positive electrode active material layer 34 contains, for example, a positive electrode active material such as a lithium transition metal composite oxide, and the negative electrode active material layer 44 contains, for example, a negative electrode active material such as graphite.

The positive electrode 30 and the negative electrode 40 manufactured as described above and a separator made of, for example, an olefin-based resin are wound by a winding machine to form an electrode assembly 50. A winding end is fixed by a tape 52.

### "Laminate Film Outer-Packaging Process/Sealing Process"

FIG. 4 is a view showing a laminate film outer-packaging process and a sealing process. As shown therein, the laminate film 120 is folded in two to enwrap the electrode assembly 50. At this time, the positive electrode tab 22 and the negative electrode tab 24 protrude from a side opposite to the side of the laminate film 120 folded in two. The side where the positive electrode tab 22 and the negative electrode tab 24 protrude is referred to as a top side. Bo doing so, a product-in-process 60 in which the electrode assembly 50 is housed between the laminate films 120 is obtained.

Then, top sealing is performed by heating and pressing end portions of the laminate films 120 on the top side to weld-bond the inner resin layers 126 to each other. The top sealing is performed in a state where the positive electrode tab 22 and the negative electrode tab 24 are sandwiched between the laminate films 120 with the tab films 26 and 28 interposed therebetween, and the positive electrode tab 22 and the negative electrode tab 24 protrude outward.

Next, side sealing is performed by weld-bonding the laminate films 120 enwrapping the electrode assembly 50 on one of the lateral sides. As a result, a product-in-process 60 of which a side is open only on the other one of the lateral sides of the laminate films 120 enwrapping the electrode assembly 50 is obtained.

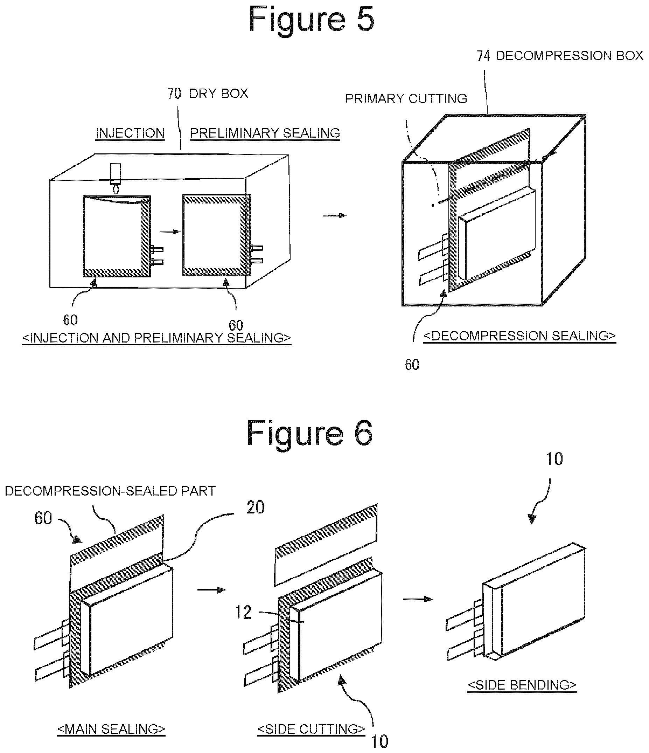

FIG. 5 is a view showing an injection process and a decompression-sealing process. As shown therein, an electrolyte solution is injected into the product-in-process 60 from the opening inside a dry box 70. The electrolyte solution contains a non-aqueous solvent and an electrolyte salt dissolved in the non-aqueous solvent. As the non-aqueous solvent, for example, esters, ethers, nitriles, amides, and mixtures of two or more thereof are used. The non-aqueous solvent may contain a halogen-substituted product in which at least some of hydrogen in any of the solvents described above is substituted with a halogen atom such as fluorine. Examples of the non-aqueous solvent include ethylene carbonate (EC), ethyl methyl carbonate (EMC), dimethyl carbonate (DMC), and mixed solvents thereof. As the electrolyte salt, for example, a lithium salt such as LiPF₆ is used.

After the electrolyte solution is injected, the opening side is preliminarily sealed. Next, after the electrolyte solution permeates, predetermined charging is performed.

After the charging is completed, the product-in-process 60 is housed in a decompression box 74 to decompression-seal the product-in-process 60. Thereafter, a partial portion of the decompression-sealed part is primarily cut.

FIG. 6 is a view showing a main sealing process, a side cutting process, and a finishing process. With respect to the product-in-process 60 that has been decompression-sealed, main sealing is performed on the preliminarily sealed side to form a main sealed part 20. The main sealed part 20 is a part on the product-in-process 60 side of the primarily cut portion. As a result, the inner resin layer 126 pushed out by the main sealing can spread like a free end. Then, this portion is subjected to side cutting to remove the unnecessary laminate film 120.

Bo doing so, a product-in-process 60 in which the electrode assembly 50 is enclosed in the laminate-film outer package 12 is obtained.

Then, both sides of the laminate-film outer package 12 are bent to the side surfaces of the product-in-process 60, whereby the battery 10 in FIG. 1 is completed.

### "Sealing Process"

As described above, in the present embodiment, the laminate film 120 is sealed in three sealing processes including the top sealing process, the side sealing process, and the main sealing process. Then, in this sealing process, a two-stage sealing process is performed.

### <First Stage>

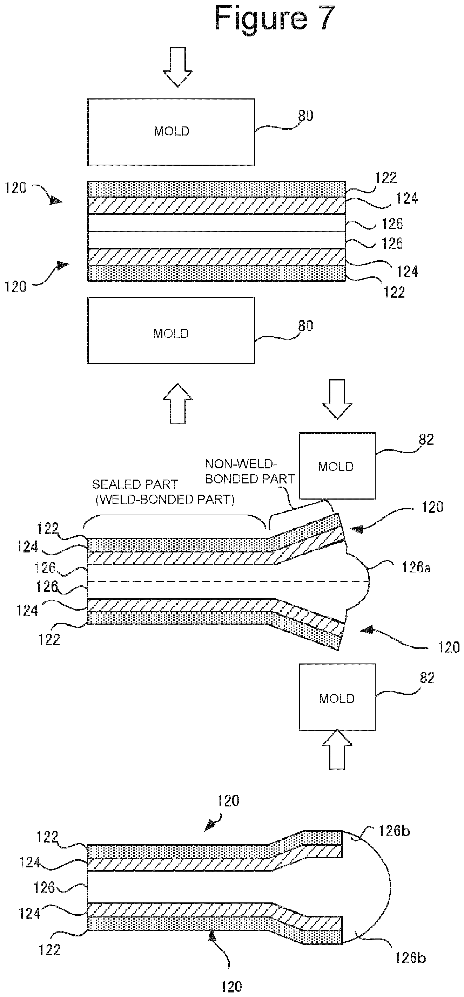

FIG. 7 is a view showing an outline of a sealing process. First, in a first stage, leading end portions of the laminate films 120 formed by two-part folding to overlap each other with the inner resin layers 126 facing each other are sealed. For this sealing, molds 80 having a shape corresponding to that of the sealed part is prepared, and the sealed part is pressed and heated by the molds 80 from both sides of the laminate films 120 overlapping each other. As a result, the inner resin layers 126 are weld-bonded to each other. The heating temperature is about 180 to 200°C. As described above, the outer resin layers 122 are made of, for example, nylon, and the inner resin layers 126 are made of, for example, polypropylene, so that the inner resin layers 126 can be weld-bonded to each other. Note that there are various types of resins, and the inner resin layers 126 can be weld-bonded to each other by using a resin that is weaker in heat resistance for the inner resin layers 126 than for the outer resin layers 122.

The pressurization by the molds 80 causes portions pressed against the molds 80 to be recessed in a corresponding shape. Here, a band-shaped leading end region that is not pressed by the mold 80 remains on a leading end side of the laminate film 120. This is to prevent the leading end portion from being broken due to a large load applied thereto.

Therefore, the leading end region of the laminate film 120 is bent outward with a leading end of the mold 80 as a starting point, and the leading end of the laminate film 120 faces obliquely upward.

Bo doing so, in the first-stage sealing process, the portions heated and pressed by the molds 80 become sealed regions that are weld-bonded to each other, and the band-shaped portions that are not weld-bonded to each other remain on the leading end side. In addition, the pair of inner resin layers 126 of the pair of pressed laminate films 120 move toward the leading ends that are free ends, and have a bulging shape in which the central portion protrudes.

### <Second Stage>

When the first-stage sealing process is completed, a second-stage sealing process is then performed. In this second-stage sealing process, the non-weld-bonded part on the leading end side is heated and pressed by molds 82. At this time, the molds 82 stop movement toward the laminate films 120 halfway. That is, the movement is stopped at positions where the leading end portions of the pair of laminate films 120 spreading outward are parallel to each other.

As a result, the combined portion of the pair of inner resin layers 126 bulging toward the leading end side is pressed from both sides. In this case, the inner resin layers 126 are pressed as the metal layers 124 and the outer resin layers 122 move inward, so that leading end surfaces of the metal layers 124 and the outer resin layers 122 are covered by the inner resin layers 126. That is, since the molds 82 is heated at a relatively low temperature and pressed halfway, a bulging portion 126a of the combined pair of inner resin layers 126 spreads outward, so that at least the end surfaces of the metal layers 124 can be covered.

Here, although different molds are used for the molds 80 in the first-stage sealing process and the molds 82 in the second-stage sealing process, identical molds may be used.

### <Top Sealing>

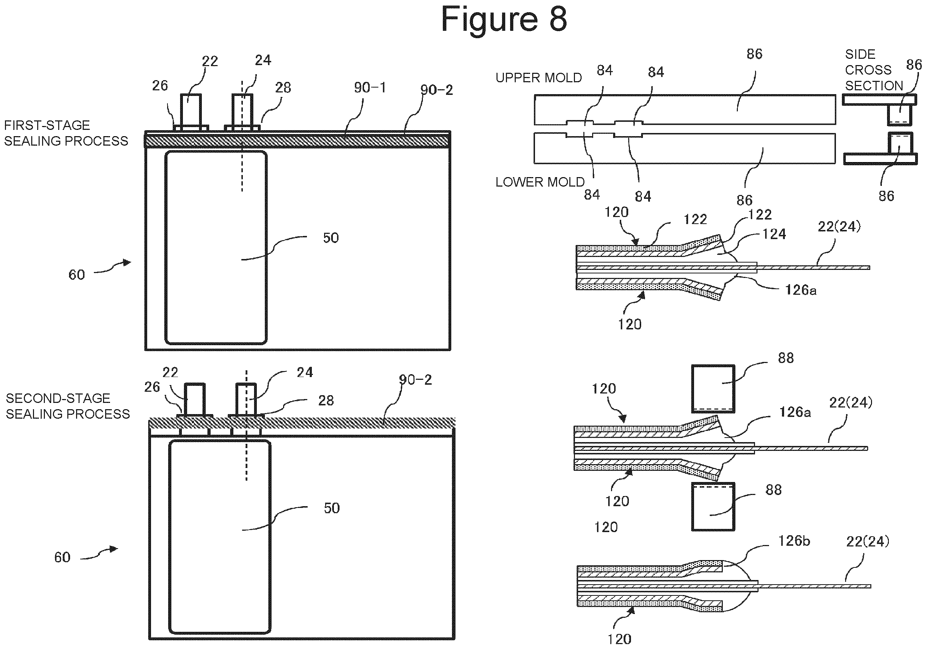

FIG. 8 is a view for explaining the top sealing process. As shown in the drawing, the top sealing is performed by sealing the vicinity of the leading end of the product-in-process 60 on the top side where the positive electrode tab 22 and the negative electrode tab 24 protrude as a belt-shaped sealed part 90-1.

In the first-stage sealing process, the sealed part 90-1 is heated and pressed by molds 86 for weld-bonding. At this time, a non-weld-bonded part 90-2 remains on the leading end side of the sealed part 90. On the right side of the drawing, a plan view and a side cross-sectional view of the mold 86 used in the first-stage sealing process are shown. As shown therein, the mold 86 has a bar shape having a quadrangular cross section that traverses one entire side (top side) of the product-in-process 60, and a band-shaped sealed part is formed by sandwiching the side portions of the product-in-process 60 between the pair of metal molds 86. The pair of metal molds 86 have tab release portions 84 which are recessed portion corresponding to the thickness of the positive electrode tab 22 and the negative electrode tab at portions where the positive electrode tab and the negative electrode tab 24 sandwiched therebetween. As a result, appropriate sealing can be performed to include the portions where the electrode tabs exist.

Then, in the second sealing process, by heating and pressing the non-weld-bonded part 90-2 using molds 88, the end surfaces of the metal layers 124 can be covered with bulging portions 126b of the inner resin layers 126. Also in the top sealing, identical molds can be used for the molds 86 in the first-stage sealing process and the molds 88 in the second-stage sealing process.

### <Side Sealing>

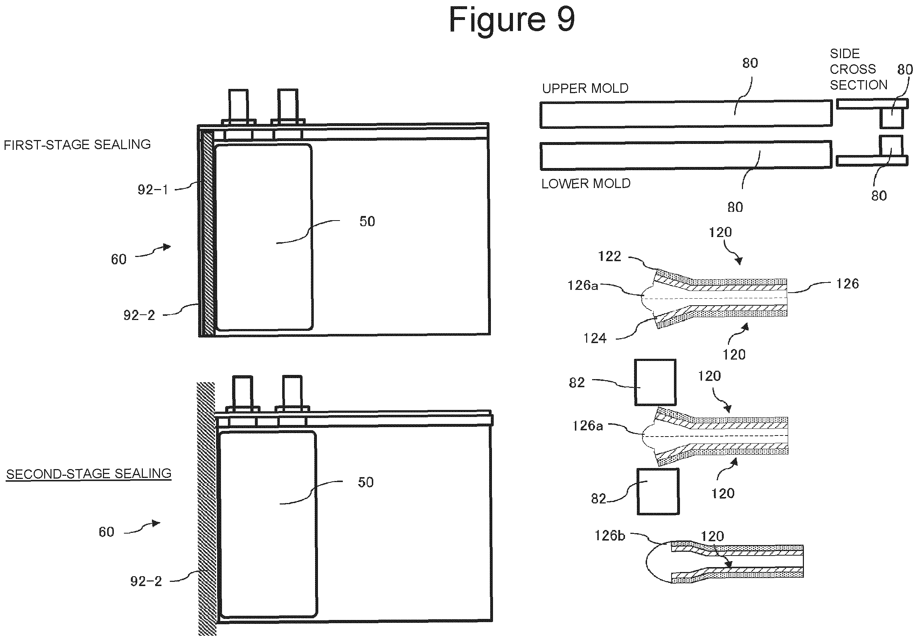

FIG. 9 is a view for explaining the side sealing process. As shown therein, the vicinity of one leading end of the product-in-process 60 is sealed as a belt-shaped sealed part 92-1.

In the first-stage sealing process, the sealed part 92-1 is heated and pressed by molds 80 for weld-bonding. At this time, a non-weld-bonded part 92-2 remains on the leading end side of the sealed part 92-1. On the right side of the drawing, a plan view and a side cross-sectional view of the mold 80 used in the first-stage sealing process are shown, and the mold 80 has a shape corresponding to that of the sealed part 92-1.

Then, in the second-stage sealing process, by partially heating and pressing the non-weld-bonded part 92-2 using molds 82, the end surfaces of the metal layers 124 can be covered with bulging portions 126b of the inner resin layers 126.

### <Main Sealing>

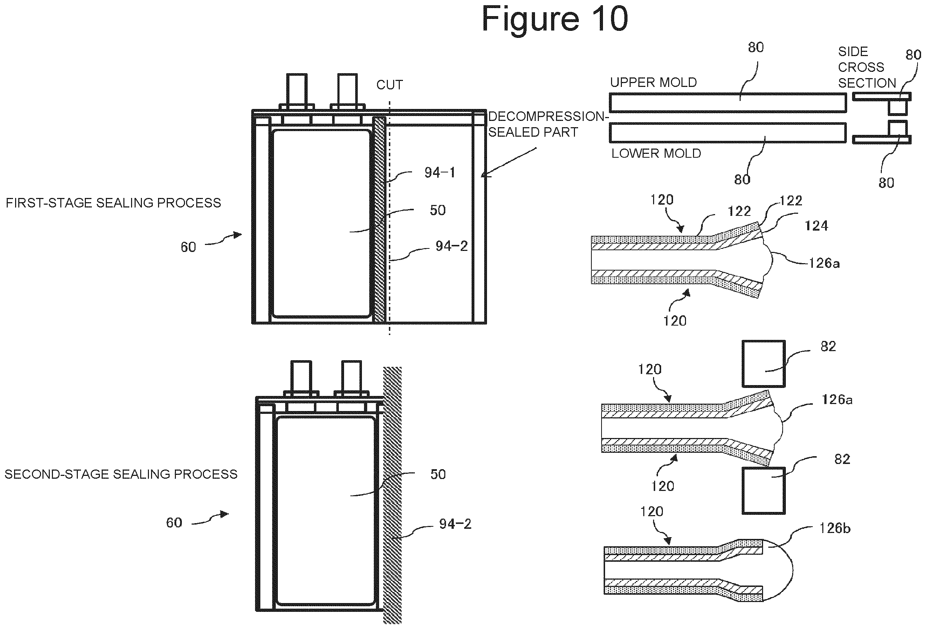

FIG. 10 is a view for explaining the main sealing process. The vicinity of the product-in-process 60 on the non-sealed side opposite to the side having been subjected to the side sealing of the product-in-process 60 is sealed with a belt-shaped sealed part 90.

In the first-stage sealing process, a sealed part 94-1 is heated and pressed by molds 80 having a shape similar to that in the side sealing, and a non-weld-bonded part 94-2 remains on the leading end side of the sealed part 94-1. Here, in the main sealing, the pair of laminate films 120 overlapping each other by the two-part folding are not cut. However, since the pair of laminate films 120 are primarily cut, the inner resin layers 126 bulge here, and the sealed part 90 bulges outward in the same way as in the case of the side cutting.

Then, the non-weld-bonded part 94-2 remains outside the sealed part 90 between the pair of laminate films 120, and is subjected to side cutting to separate an unnecessary overlapping portion between the laminate films 120 on the lateral side. After the first-stage sealing process, side cutting can be performed, followed by the second-stage sealing process.

Next, by partially heating and pressing the non-weld-bonded part 94-2 remaining inside the cut portion using molds 82, the end surfaces of the metal layers 124 can be covered with bulging portions 126b of the inner resin layers 126.

### "Effects of Embodiment"

In the present embodiment, the two-stage sealing process can be performed to seal the product-in-process 60 with the laminate films 120, and the end surfaces of the metal layers 124 of the laminate films 120 can be covered with the inner resin layers 126 by the second-stage sealing process. Therefore, it is not necessary to cover the end surfaces with a separate insulating material or the like, there is no increase in the number of components, and the end surfaces of the metal layers 124 can be insulated in a relatively simple process.

### REFERENCE SIGNS LIST

- 10: Battery
- 12: Laminate-film outer package
- 16: Top sealed part
- 18: Side sealed part
- 20: Main sealed part
- 22: Positive electrode tab
- 24: Negative electrode tab
- 50: Electrode assembly
- 60: Product-in-process
- 80, 82: Mold
- 120: Laminate film
- 122: Outer resin layer
- 124: Metal layer
- 126: Inner resin layer

## Claims

1. A method for producing a battery equipped with a laminate-film outer package in which an electrode assembly including a positive electrode and a negative electrode is outer-packaged with laminate films each including an outer resin layer, a metal layer, and an inner resin layer, the method comprising:
an outer-packaging process of outer-packaging the electrode assembly with the laminate-film outer package; and
a sealing process of sealing a periphery of the electrode assembly with the laminate-film outer package, wherein
the sealing process includes:
a first-stage sealing process of weld-bonding the inner resin layers inside a non-weld-bonded part left between leading end portions of the inner resin layers; and
a second-stage sealing process of heating and pressing the non-weld-bonded part to push the inner resin layers outward so that end surfaces of the metal layers are covered with the inner resin layers at a leading end of the laminate-film outer package.

2. The method according to claim 1, wherein
the positive electrode and the negative electrode have a positive electrode tab and a negative electrode tab, respectively,
in the outer-packaging process, the electrode assembly is outer-packaged with the laminate-film outer package in a state where the positive electrode tab and the negative electrode tab protrude to the outside, and
in the first-stage sealing process, the inner resin layers around the electrode assembly are weld-bonded to each other in a state where the positive electrode tab and the negative electrode tab protrude to the outside.

3. The method according to claim 2, wherein
the laminate-film outer package is folded in two to accommodate the electrode assembly therein in the outer-packaging process, and both lateral sides and an upper side of the electrode assembly are sealed in the sealing process, and
the upper side of the electrode assembly is sealed in a state where the positive electrode tab and the negative electrode tab are exposed to the outside.
